# EUROPÄISCHE PATENTSCHRIFT

(11) **EP 3 225 452 B1**
(45) Veröffentlichungstag und Bekanntmachung des Hinweises auf die Patenterteilung: **09.06.2021**
(21) Anmeldenummer: 16163540.4
(22) Anmeldetag: 01.04.2016
(51) Int. Cl.: B60L 5/04, B60L 5/42, B60L 50/50, B60M 1/36, H02J 7/00, H02J 7/02

(54) **LADESTATION FÜR EINEN OBERLEITUNGSBUS**
CHARGING STATION FOR A TROLLEY BUS
STATION DE CHARGE POUR UN TROLLEYBUS

(43) Veröffentlichungstag der Anmeldung: 04.10.2017
(73) Patentinhaber: Carrosserie Hess AG, 4512 Bellach (CH)
(72) Erfinder: Naef, Alex, 4512 Bellach (CH); Gisler, Hans-Jörg, 3011 Bern (CH)
(74) Vertreter: Keller Schneider Patent- und Markenanwälte AG (Bern)

(56) Entgegenhaltungen:
- WO-A1-2014/162015
- WO-A1-2014/202103
- WO-A2-2010/003021
- US-A1- 2013 245 876

## Beschreibung

### Technisches Gebiet

Die Erfindung betrifft eine Ladestation für einen Oberleitungsbus, der einen Stromabnehmer mit zwei Stromabnehmerköpfen mit Kontaktschuhen zur Kontaktierung einer Gleichstrom führenden Oberleitung im Fahrbetrieb, mindestens einen Antriebsmotor zum Antreiben einer Antriebsachse und einen Energiespeicher zur Zwischenspeicherung von über den Stromabnehmer aufgenommener elektrischer Energie umfasst. Die Ladestation weist eine Stromversorgung und zwei damit leitend verbundene Kontaktelemente zur Kontaktierung der zwei Stromabnehmerköpfe auf. Die Erfindung betrifft weiter ein Oberleitungsbus-System mit einer solchen Ladestation sowie ein Verfahren zum Aufladen eines Energiespeichers eines Oberleitungsbusses.

### Stand der Technik

Oberleitungsbusse (Synonym: Trolleybusse) werden seit längerer Zeit eingesetzt. Üblicherweise wird der Gleichstrom der Oberleitung im Fahrbetrieb, also während der Fahrt des Oberleitungsbusses, mittels des Stromabnehmers abgenommen und über einen Motorumrichter direkt einem oder mehreren Antriebsmotoren zugeführt. Bei Oberleitungsbussen werden in der Regel zweipolige Oberleitungen eingesetzt, mit zwei Fahrdrähten unterschiedlicher Polarität, die entsprechend von zwei Stromabnehmerköpfen kontaktiert werden. Diese Stromabnehmerköpfe sind im Endbereich von Stromabnehmerstangen angeordnet und umfassen einen Trägerteil, welcher in der Regel aus einem metallischen Werkstoff (beispielsweise Messing) gefertigt ist, sowie darin gehaltene Kontaktschuhe zur Kontaktierung der Fahrdrähte der Oberleitung. Die Kontaktschuhe sind üblicherweise aus graphithaltiger Schleifkohle gefertigt und werden regelmässig ausgewechselt.

Ein Energiespeicher zur Zwischenspeicherung von über den Stromabnehmer aufgenommener elektrischer Energie ermöglicht einen Fahrbetrieb auch in Abschnitten, die nicht mit einer Oberleitung versehen sind. Wird im oberleitungsgebundenen Fahrbetrieb nicht die gesamte aufgenommene elektrische Leistung für die Speisung der Antriebsmotoren und weiterer Verbraucher des Oberleitungsbusses benötigt, kann der Energiespeicher im Fahrbetrieb aufgeladen werden. Dies gilt auch für Haltezeiten an mit Oberleitungen ausgerüsteten Haltestellen.

Sieht die Route eines Oberleitungsbusses mit Energiespeicher längere Abschnitte ohne Oberleitung vor, muss die Kapazität der Energiespeicher entsprechend ausgelegt werden. Dies führt zu einem höheren Gewicht und damit einem höheren Energieverbrauch und/oder einer reduzierten Fahrdynamik. Zusätzlich oder alternativ können weitere Lademöglichkeiten vorgesehen werden, z. B. an Endhaltestellen der Route oder an Haltestellen, wo längere Stopps eingelegt werden.

In Wien sind Elektrobusse im Einsatz, die von den Firmen Siemens und Rampini hergestellt wurden. Sie werden über das Gleichstromnetz der Strassen- und U-Bahnen aufgeladen. Die Energiespeicher, Lithium-Ferrit-Batterien, werden nachts langsam auf volle Kapazität aufgeladen. An den Endhaltestellen der Linien verbindet sich ein Stromabnehmer des Elektrobusses mit dem Strassenbahnnetz und kann dort über einen Schnellladevorgang während typischerweise 10-15 Minuten aufgeladen werden. Neben reinen Elektrobussen, die nur im Stillstand aufgeladen werden, sind auch Busse mit Pantographen im Einsatz, die einerseits an der Endhaltestelle, andererseits über ein kurzes Stück montierter Oberleitung während der Fahrt aufgeladen werden. Das Aufladen erfolgt über zwei isolierte, nebeneinander am Pantographen montierte Schleifstücke.

Weil das Stromabnehmersystem nur bei dynamischer Ladung über die Schleifschuhe hohe Ladeleistung übertragen kann, ist diese normalerweise bei stationärem Laden über die Fahrleitung beschränkt. Dies führt zu einer hohen Ladedauer oder einer unvollständigen Aufladung.

Die WO 2011/079215 A2 (Proterra Inc.) beschreibt eine Ladestation sowie ein Ladeverfahren für das Aufladen von Energiespeichern elektrischer Fahrzeuge. Die Ladestation umfasst zwei Kontaktklemmen mit leitenden Kontaktelementen, welche für den Ladevorgang mit entsprechenden, am Fahrzeug angeordneten und mit einer Ladeschaltung für den Energiespeicher verbundenen Elektroden zusammenwirken können. Die Elektroden sind beispielsweise schienenartig ausgebildet und in Längsrichtung auf dem Dach des Fahrzeugs angeordnet. Die Elektroden und die Kontaktklemmen und Kontaktelemente der Ladestation sind spezifisch für das Laden im Stillstand des Fahrzeugs ausgebildet Auch die WO 2010/003021 beschreibt eine Ladestation zur Aufladung elektrischer Fahrzeuge.

Dieses System ist entweder auf die Lademöglichkeit im Stillstand beschränkt, oder es werden gesonderte Stromabnehmer bzw. Elektroden für den Oberleitungs-Fahrbetrieb und das stationäre Aufladen benötigt.

### Darstellung der Erfindung

Aufgabe der Erfindung ist es, eine dem eingangs genannten technischen Gebiet zugehörende Ladestation zu schaffen, welche eine hohe Ladeleistung bei einfachem Aufbau ermöglicht.

Die Lösung der Aufgabe ist durch die Merkmale des Anspruchs 1 definiert. Gemäss der Erfindung sind die Kontaktelemente derart ausgeführt und angeordnet, dass bei in der Ladestation in Ladeposition befindlichem Oberleitungsbus eine leitende Verbindung zwischen den Kontaktelementen und metallischen Oberflächenbereichen der Stromabnehmerköpfe ausserhalb der Kontaktschuhe gebildet ist.

Die Erfindung beruht auf der Erkenntnis, dass die auf den Fahrbetrieb ausgerichteten Kontaktschuhe für das stationäre Laden wenig geeignet sind. Sie weisen im stationären Zustand einen hohen Kontaktwiderstand auf, was zu einer entsprechend starken Erwärmung führt und die mögliche übertragbare Leistung beschränkt - von bis zu 300 kW im Fahrbetrieb auf lediglich noch 80 kW oder weniger im Stillstand. Für das stationäre Laden werden erfindungsgemäss deshalb nicht die für den Fahrbetrieb optimierten Kontaktschuhe verwendet, sondern weitere Bereiche der Stromabnehmerköpfe, welche zwar metallisch und leitend sind, aber normalerweise nur eine Halte- und Schutzfunktion haben und nicht zur elektrischen Kontaktierung externer Elemente dienen. Der Kontakt zwischen den (insbesondere metallischen) Kontaktelementen der Ladestation und den metallischen Oberflächenbereichen ermöglicht deutlich höhere Ladeleistungen und damit verkürzte Ladezeiten, ohne dass busseitig gesonderte Elektroden für das stationäre Laden vorgesehen werden müssten. Gleichzeitig bleibt die Stromübertragung im Fahrbetrieb unbeeinträchtigt.

Ein entsprechend ausgebildeter Oberleitungsbus kann somit in einem mit erfindungsgemässen Ladestationen ausgerüsteten Netz sowohl oberleitungsgebunden als auch autonom eingesetzt werden. Er verbindet somit die Vorteile eines Trolleybusses mit dynamischer Ladung des Energiespeichers über die Oberleitung mit denjenigen eines Batterie-Buses mit konduktivem "opportunity charging" an Ladestationen. Nebst der Stromversorgung via Oberleitung, im Fahrbetrieb, über den normalen Kontakt zwischen den Schleifschuhen der Stromabnehmerköpfe, erfolgt zum schnellen Aufladen des Energiespeichers stationär eine Kontaktierung der Ladestation über die metallischen Oberflächenbereiche der Stromabnehmerköpfe, was eine hohe Ladeleistung ermöglicht. Für beide Arten der Energieübertragung wird busseitig derselbe Stromabnehmer eingesetzt.

Die Erfindung kann mit handelsüblichen Stromabnehmern und insbesondere Stromabnehmerköpfen ausgeführt werden, Modifikationen sind nicht erforderlich. Es sind allenfalls die Leitungen von den Stromabnehmerköpfen zu den Komponenten des Busses im Hinblick auf die zu erwartenden Ladeströme im Querschnitt anzupassen.

Die Ladestation kann ohne weiteres auch zum Aufladen reiner Elektrobusse verwendet werden, die nicht für den Oberleitungsbetrieb ausgerüstet sind, namentlich in Systemen, in welchen sowohl Oberleitungsbusse als auch solche reine Elektrobusse verkehren.

Ein erfindungsgemässes Oberleitungsbus-System umfasst somit
a) mindestens einen Oberleitungsbus mit einem Stromabnehmer mit zwei Stromabnehmerköpfen mit Kontaktschuhen zur Kontaktierung einer Gleichstrom führenden Oberleitung im Fahrbetrieb, mindestens einem Antriebsmotor zum Antreiben einer Antriebsachse und einem Energiespeicher zur Zwischenspeicherung von über den Stromabnehmer aufgenommener elektrischer Energie;
b) mindestens einen Fahrabschnitt mit einer Oberleitung zur Speisung des Oberleitungsbusses über die Kontaktschuhe im Fahrbetrieb; und
c) mindestens eine erfindungsgemässe Ladestation zum stationären Aufladen des Energiespeichers über metallische Oberflächenbereiche der Stromabnehmerköpfe ausserhalb der Kontaktschuhe.

Mit "Fahrabschnitt" ist dabei ein Abschnitt der Fahrtroute gemeint, welcher einen massgeblichen Teil dieser Route ausmacht, beispielsweise mindestens 10%, insbesondere aber mindestens 50%. In gewissen Fällen sind nur kurze Teilstrecken nicht mit einer Oberleitung ausgerüstet.

Bevorzugt sind die Kontaktelemente zangenartig ausgebildet und weisen zwei Schenkel mit einander zugewandten Innenseiten und voneinander abgewandten Aussenseiten auf, wobei Kontaktflächen für die metallischen Oberflächenbereiche der Stromabnehmerköpfe an den Innenseiten und/oder den Aussenseiten angeordnet sind. Dadurch lässt sich eine sichere mechanische und elektrische Kontaktierung erreichen, wobei Unterschieden in der Geometrie der Stromabnehmerköpfe innerhalb gewisser Grenzen Rechnung getragen werden kann.

Mit Vorteil sind die zwei Schenkel schwenkbeweglich, um mit einer vorgebbaren Anpresskraft auf einen aufgenommenen Stromabnehmerkopf einzuwirken. Dies stellt eine zuverlässige elektrische Kontaktierung sicher und vermeidet somit insbesondere eine Funkenbildung. Die vorgebbare Anpresskraft zwischen Schenkel und Stromabnehmerkopf beträgt insbesondere mindestens 100 N.

Die zwei Schenkel können dabei aufeinander zustellbar sein und in der Kontaktposition die Aussenseiten des Stromabnehmerkopfs mit der vorgegebenen Anpresskraft kontaktieren. Bei anderen Ausführungen sind die zwei Schenkel voneinander weg bewegbar und kontaktieren in der Kontaktposition zwei gegenüberliegende Innenseiten des Stromabnehmerkopfs, z. B. die Innenseiten zweier Schenkel eines U-förmigen Stromabnehmerkopfs. Bei weiteren Varianten werden sowohl die Innen- als auch Aussenseiten kontaktiert.

Alternativ haben die Kontaktelemente eine andere Geometrie: Sie sind beispielsweise im Wesentlichen flach ausgebildet und liegen auf der Oberseite der Stromabnehmerköpfe auf, oder sie haben eine fixe Geometrie, welche der Geometrie der Stromabnehmerköpfe angepasst ist. Diese Variante ist insbesondere dann realisierbar, wenn sämtliche auf einer Linie eingesetzten Stromabnehmerköpfe dieselbe Geometrie aufweisen.

Mit Vorteil ist eine Längsausdehnung der Kontaktelemente in Fahrdrahtrichtung mindestens 3 mal, bevorzugt mindestens 5 mal, grösser als eine Längsausdehnung der Stromabnehmerköpfe. Typische Stromabnehmerköpfe haben eine Längenausdehnung von ca. 10-15 cm, die Kontaktelemente sind somit mit Vorteil mindestens 30 cm, insbesondere mindestens 50 cm lang. In der Praxis sind auch grössere Längen von 1 - 2 m von Vorteil. Generell wird dadurch die Längspositionierung des Busses in der Ladestation vereinfacht. Das Einfahren kann somit schneller erfolgen, und Fehlpositionierungen werden vermieden.

Bevorzugt umfasst die Ladestation ein Lagerelement zur mechanischen Abstützung der Stromabnehmerköpfe im Bereich der Kontaktschuhe, wobei das Lagerelement insbesondere nicht mit der Stromversorgung der Ladestation verbunden ist. Das Lagerelement repliziert die Geometrie der Fahrdrähte, hat aber keine elektrische, sondern nur eine mechanische Funktion. Weil der Stromabnehmerkopf im Fahrbetrieb durch die Fahrdrähte nicht nur mit Strom versorgt, sondern auch mechanisch geführt wird, ist die entsprechende, mit dem jeweiligen Fahrdraht zusammenwirkende Geometrie des Stromabnehmerkopfs gut für die Positionierung des Kopfs in der Ladestation geeignet. Der Fahrdraht und damit der mit ihm zusammenwirkende Bereich des Stromabnehmerkopfs haben zudem eine vorgegebene, einheitliche Geometrie, was für die Aussenform des Stromabnehmerkopfs nicht gilt. Das Lagerelement ist insbesondere aus einem nichtleitenden Material, z. B. einem Kunststoff, gefertigt.

Bevorzugt umfasst die Ladestation eine Zentriereinrichtung für die Stromabnehmerköpfe. Diese sorgen dafür, dass die Stromabnehmerköpfe zuverlässig auf die Kontaktelemente ausgerichtet werden, beispielsweise beim Hochfahren des Stromabnehmers in der Ladestation. Die Zentriereinrichtung kann beispielsweise durch konisch ("trichterartig") zulaufende Elemente aus einem nichtleitenden Material, z. B. Kunststoff, gebildet sein.

Ein erfindungsgemässes Verfahren zum Aufladen eines Energiespeichers eines Oberleitungsbusses mit einem Stromabnehmer mit zwei Stromabnehmerköpfen mit Kontaktschuhen zur Kontaktierung einer Gleichstrom führenden Oberleitung im Fahrbetrieb und mindestens einem Antriebsmotor zum Antreiben einer Antriebsachse, umfasst folgende Schritte:
a) Bewegen des Oberleitungsbusses in den Bereich einer Ladestation;
b) Anheben der Stromabnehmer mit den Stromabnehmerköpfen zur Kontaktierung von Kontaktelementen der Ladestation, wobei die Kontaktelemente metallische Oberflächenbereiche der Stromabnehmerköpfe ausserhalb der Kontaktschuhe leitend kontaktieren;
c) Feststellen eines leitenden Kontakts zwischen den Kontaktelementen und den metallischen Oberflächenbereichen; und
d) Einschalten eines Ladestroms zwischen der Ladestation und den Stromabnehmerköpfen.

Weil vor dem Einschalten des Ladestroms der leitende Kontakt zwischen den Kontaktelementen und den metallischen Oberflächenbereichen festgestellt wird, wird eine Funkenbildung bei der Kontaktierung zwischen Stromabnehmer und Ladestation zuverlässig verhindert. Analog wird nach dem Ende des Ladevorgangs der Ladestrom zunächst ausgeschaltet, bevor die Stromabnehmer zurückgezogen werden, insbesondere in die Parkposition des Oberleitungsbusses.

Durch die Metall-Metall-Kontaktierung, die Anpresskraft zwischen den Kontaktelementen und den metallischen Oberflächenbereichen des Stromabnehmerkopfs und das selektive Einschalten des Ladestroms sind hohe Ladeleistungen erzielbar.

Bevorzugt kontaktieren die Kontaktschuhe der Stromabnehmerköpfe beim Anheben der Stromabnehmer zunächst ein Lagerelement zur mechanischen Abstützung, wonach zangenartige Kontaktelemente mit einer vorgegebenen Anpresskraft auf die Stromabnehmerköpfe zugestellt werden, so dass Innenseiten und/oder Aussenseiten von Schenkeln der zangenartigen Kontaktelemente die metallischen Oberflächenbereich der Stromabnehmerköpfe elektrisch kontaktieren.

Mit Vorteil erfolgt die Feststellung des leitenden Kontakts gestützt auf eine Impedanzmessung. Die Ladestation umfasst somit eine Einrichtung zur Impedanzmessung in Bezug auf eine Verbindung zwischen den Kontaktelementen und den Stromabnehmerköpfen. Dies ermöglicht eine einfache und sichere Feststellung der geforderten elektrischen Kontaktierung.

Mit Vorteil ist eine Ladespannung von mindestens 550 V und eine Ladeleistung von mindestens 100 kW, bevorzugt mindestens 150 kW, erzeugbar. Je nach Ausgestaltung des Systems sind Ladeleistungen von bis zu 400 kW und mehr möglich. Damit lässt sich der Energiespeicher des Oberleitungsbusses deutlich schneller aufladen als bei bekannten Lösungen, bei welchen ein Aufladen über die Kontaktschuhe der Stromabnehmer erfolgt. Dort betragen typische maximale Ladeleistungen ca. 60 kW. Limitierend sind dabei die Energieübertragung über den im Stromabnehmerkopf aufgenommenen Kontaktschuh aus Schleifkohle sowie die Kupferlitzen des Fahrdrahts. Versucht man, die Leistung zu erhöhen, entsteht ein Lichtbogen zwischen Stromabnehmer und Fahrdraht, dabei kann sich der Fahrdraht bis annähernd zum Schmelzpunkt erhitzen.

Eine besondere Ausführungsform der erfindungsgemässen Ladestation weist einen Netzanschluss auf, einen Energiespeicher zur Zwischenspeicherung von über den Netzanschluss aufgenommener elektrischer Energie und einen Spannungswandler zur Erzeugung der Ladespannung. Dies ermöglicht ein Aufladen des Energiespeichers mittels einer erfindungsgemässen Ladestation auch an Orten, zu denen keine gesonderte Zuleitung führt. Insbesondere kann die Ladestation mit gängigem 400 V-Dreiphasenwechselstrom betrieben werden. Weil die Ladestation in der Regel nicht dauernd belegt sein wird, kann der lokale stationäre Energiespeicher der Ladestation während der nicht belegten Zeiten aufgeladen werden, was dann das Laden des Oberleitungsbusses mit einer höheren Ladeleistung und mit der benötigten höheren Ladespannung ermöglicht.

Bei einer bevorzugten Ausführungsform umfasst der Oberleitungsbus eine Einrichtung zur automatischen Querpositionierung der Stromabnehmerköpfe. Diese umfasst zum einen eine geeignete Sensorik zur Erkennung der Position der Fahrdrähte bzw. der Kontaktelemente der Ladestation, zum anderen eine Motorik zum Positionieren des Stromabnehmers. Die beiden Stromabnehmerköpfe können dabei einzeln oder gemeinsam positioniert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Schrägbild einer Ladestation gemäss einer ersten Ausführungsform sowie eines Stromabnehmers eines Oberleitungsbusses in der Ladeposition;
- Fig. 2: eine Detailansicht eines Stromabnehmerkopfes in der Ladeposition in der Ladestation gemäss der ersten Ausführungsform;
- Fig. 3: ein Schrägbild einer Ladestation gemäss einer zweiten Ausführungsform sowie eines Stromabnehmers eines Oberleitungsbusses in der Ladeposition;
- Fig. 4: eine Detailansicht eines Stromabnehmerkopfes in der Ladeposition in der Ladestation gemäss der zweiten Ausführungsform; und
- Fig. 5A-E: schematische Darstellungen zur Illustration des Ablaufs eines erfindungsgemässen Ladeverfahrens.

Grundsätzlich sind in den Figuren gleiche Teile mit gleichen Bezugszeichen versehen.

### Wege zur Ausführung der Erfindung

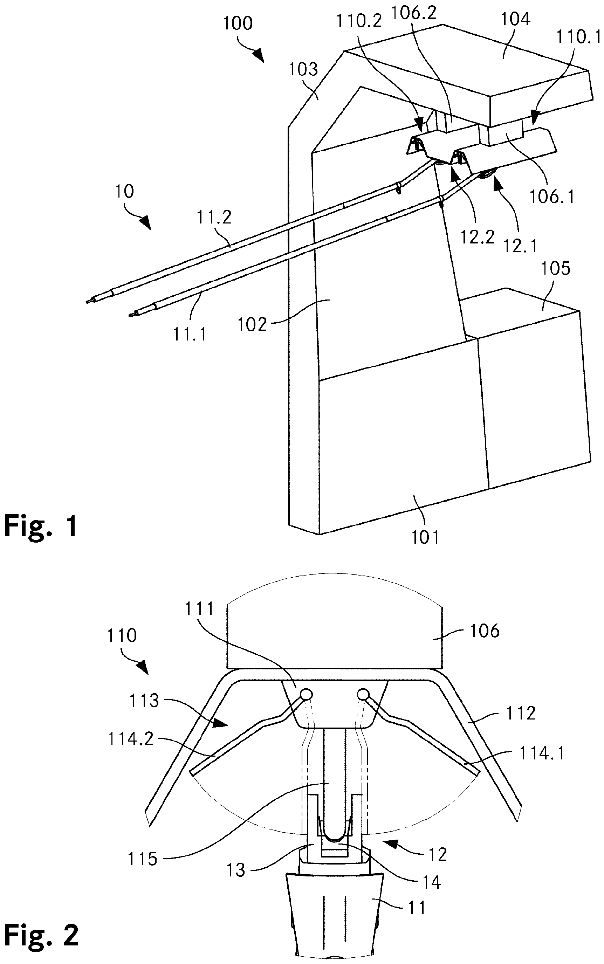

Die Figur 1 ist ein Schrägbild einer Ladestation gemäss einer ersten Ausführungsform sowie eines Stromabnehmers eines Oberleitungsbusses in der Ladeposition. Die Figur 2 ist eine Detailansicht eines Stromabnehmerkopfes in der Ladeposition in der Ladestation gemäss der ersten Ausführungsform. Der Oberleitungsbus selbst ist in den Figuren zugunsten der Übersichtlichkeit nicht dargestellt.

Der Stromabnehmer 10 entspricht einer vorbekannten Konfiguration. Er umfasst zwei Stromabnehmerruten 11.1, 11.2, die parallel zueinander verlaufen, beispielsweise in einem Abstand von ca. 60 cm, und die an ihrem freien Ende einen Stromabnehmerkopf 12.1, 12.2 aufweisen. Am anderen Ende sind die Stromabnehmerruten mit einer entsprechend vorbekannten Einrichtung auf dem Dach eines Oberleitungsbusses befestigt. Die Stromabnehmerruten 11.1, 11.2 werden im oberleitungsgebundenen Fahrbetrieb durch Federmittel an die Oberleitung gepresst und weisen dann in Bezug auf das Fahrzeugdach einen mittleren Winkel von ca. 30° auf. Im teilweise angehobenen Zustand, welcher auf der Figur 1 dargestellt ist, stehen die Stromabnehmerruten 11.1, 11.2 in einem Winkel von ca. 20° vom Fahrzeugdach ab. Die beiden Stromabnehmerruten 11.1, 11.2 sind mechanisch unabhängig voneinander, können also einzeln angehoben oder in eine Parkposition, in welcher sie im Wesentlichen parallel zum Fahrzeugdach verlaufen, abgesenkt werden.

Die Stromabnehmerruten bestehen in an sich bekannter Weise aus einem metallischen Werkstoff, aus Kunststoff oder aus einem Verbundwerkstoff. Die Stromübertragung kann je nach Material über die Stange selbst oder - wie hier dargestellt - über ein in der Stange geführtes Kabel erfolgen. Der Stromabnehmerkopf 12.1, 12.2 ist dabei über ein kurzes Verbindungskabel mit der weiterführenden Stromleitung verbunden.

Gemäss Figur 1 befindet sich der Stromabnehmer 10 in der Ladeposition bezüglich der Ladestation 100. Die Ladestation 100 umfasst eine Basis 101, welche am Boden in an sich bekannter Weise verankert ist. An die Basis 101 schliesst sich ein senkrecht verlaufender Seitenteil 102 an, dieser geht dann über einen schräg, in einem Winkel von ca. 45° verlaufenden Übergangsabschnitt 103 in einen horizontal orientierten Ausleger 104 über. Der Abstand zwischen Boden und Ausleger 104 ist so gewählt, dass ein Oberleitungsbus samt teilweise ausgefahrenem Stromabnehmer 10 die Kontaktelemente der Ladestation kontaktieren kann. Er beträgt beispielsweise ca. 5.5-6.0 m. An der Basis 101 der Ladestation 100 ist ferner ein Umrichterkasten 105 angeordnet. Er umfasst Leistungs- und Steuerelektronik für die Ladestation und stellt insbesondere den benötigten Ladestrom bereit. Bei einer Ladespannung von 750 V und einem Ladestrom von 250 A wird eine Ladeleistung von 187.5 kW erreicht. Bei entsprechender Auslegung des Oberleitungsbusses sind auch höhere Ströme und damit höhere Ladeleistungen möglich.

Über Halteteile 106.1, 106.2, welche auf der Unterseite des Auslegers 104 angeordnet sind, sind zwei Kontakteinheiten 110.1, 110.2 am Ausleger 104 angeordnet. Diese haben im gezeigten Beispiel eine Hauptausdehnung parallel zur Hauptausdehnung der Stromabnehmerruten 11.1, 11.2 sowie im Wesentlichen parallel zur Fahrzeuglängsachse eines sich im Ladebereich befindenden Oberleitungsbusses. Der Abstand der Mittelachsen der beiden Kontakteinheiten 110.1, 110.2 entspricht dem Abstand der beiden Stromabnehmerruten 11.1, 11.2 und damit der beiden Stromabnehmerköpfe 12.1, 12.2.

Ein Stromabnehmerkopf 12 in Ladestellung in einer Kontakteinheit 110 ist in der Figur 2 dargestellt. Da beide Kontakteinheiten 110.1, 110.2 gleichartig aufgebaut sind, reicht die Darstellung einer Kontakteinheit 110 aus. Der Stromabnehmerkopf 12 ist in an sich bekannter Weise drehbar und kippbar am Ende einer Stromabnehmerrute 11 angeordnet und weist eine an sich bekannte Konstruktion auf. Dargestellt ist eine Draufsicht in Längsrichtung. In dieser Richtung beträgt die Ausdehnung des Stromabnehmerkopfs 12 ca. 10 cm, seine Querschnittsform ist im Wesentlichen konstant. Der Stromabnehmerkopf 12 umfasst einen Trägerteil 13, welcher einen im Wesentlichen U-förmigen Querschnitt aufweist. Zwischen den beiden Schenkeln ist eine Aufnahme für einen Kontaktschuh 14 ausgebildet. Der Kontaktschuh 14 ist auswechselbar in den Trägerteil 13 eingesetzt. Er besteht aus graphithaltiger Schleifkohle und ist elektrisch über seine drei Aussenseiten mit dem Trägerteil 13 verbunden. Der Kontaktschuh 14 weist auf seiner nach oben gerichteten Seite eine der Fahrdrahtgeometrie angepasste Kontaktausnehmung auf.

Die Kontakteinheit 110 ist wie erwähnt über einen Halteteil 106 am Ausleger 104 der Ladestation 100 befestigt. Sie umfasst eine Grundeinheit 111, an welcher die übrigen Elemente befestigt sind. Die Grundeinheit 111 erstreckt sich über die gesamte Länge der Kontakteinheit 110 und weist auf ihrer ganzen Länge einen im Wesentlichen gleichbleibenden trapezförmigen Querschnitt auf. An der Grundeinheit 111 befestigt ist ein Einfangrichter 112 mit einem parallel zum Ausleger 104, also horizontal, verlaufenden Basisabschnitt und zwei unter einem Winkel von je ca. 70° nach unten abstehenden Seitenabschnitten. Die beiden Seitenabschnitte bilden so einen von unten nach oben konisch zulaufenden (trichterartigen) Aufnahmeraum. Der Einfangtrichter 112 bildet so eine Zentriereinrichtung für eine Stromabnehmerrute 11 mit angebrachtem Stromabnehmerkopf 12.

An der Grundeinheit 111 der Kontakteinheit 110 ist weiter eine Kontaktzange 113 gelagert. Sie umfasst zwei Schenkel 114.1, 114.2, welche um horizontale, in Hauptausdehnung der Kontakteinheit 110 verlaufende Achsen schwenkbar sind. Der Abstand der zueinander parallelen Achsen entspricht ungefähr der Querausdehnung des Stromabnehmerkopfs 12. In der Figur 2 ist mit durchgehenden Linien die geöffnete Position der Kontaktzange 113 dargestellt, in welcher die beiden Schenkel 114.1, 114.2 ausgehend von der Grundeinheit 111 von oben nach unten schräg nach aussen verlaufen. Der Winkel beträgt ca. 60° zur Vertikalen. Die zwei Schenkel 114.1, 114.2 der Kontaktzange 113 lassen sich mittels entsprechender Antriebe nach innen verschwenken, bis sie eine im Wesentlichen parallele Stellung erreichen. Diese ist in der Figur 2 mit gestrichelten Linien dargestellt. In dieser Stellung werden die beiden Schenkel 114.1, 114.2 von aussen auf die Aussenflächen des Trägerteils 13 des Stromabnehmerkopfs 12 gedrückt. Der Anpressdruck beträgt dabei ca. 100°N oder mehr.

Die Schenkel 114.1, 114.2 der Kontaktzange 113 sind mit einer innerhalb der Grundeinheit 111 der Kontakteinheit 110 verlaufenden Speiseleitung verbunden. Sie schaffen so im geschlossenen Zustand eine elektrische Verbindung zwischen der Speiseleitung und dem Stromabnehmerkopf 110, wobei für diese elektrische Verbindung der üblicherweise für die elektrische Kontaktierung eingesetzte Kontaktschuh 14 keine Rolle spielt.

Die Kontakteinheit 110 umfasst schliesslich eine Führungsschiene 115, die als Lagerelement für die Kontakteinheit 110 gegenüber dem Stromabnehmerkopf 110 dient. Die Führungsschiene weist an ihrem unteren Ende eine Geometrie auf, welche derjenigen des Fahrdrahtes entspricht. Sie kann so mit der Kontaktausnehmung des Kontaktschuhs 14 zusammenwirken und nimmt den Anpressdruck der Federmittel des Stromabnehmers 10 auf. Die Führungsschiene 115 verläuft vertikal und ist an der Grundeinheit 111 der Kontakteinheit 110 befestigt.

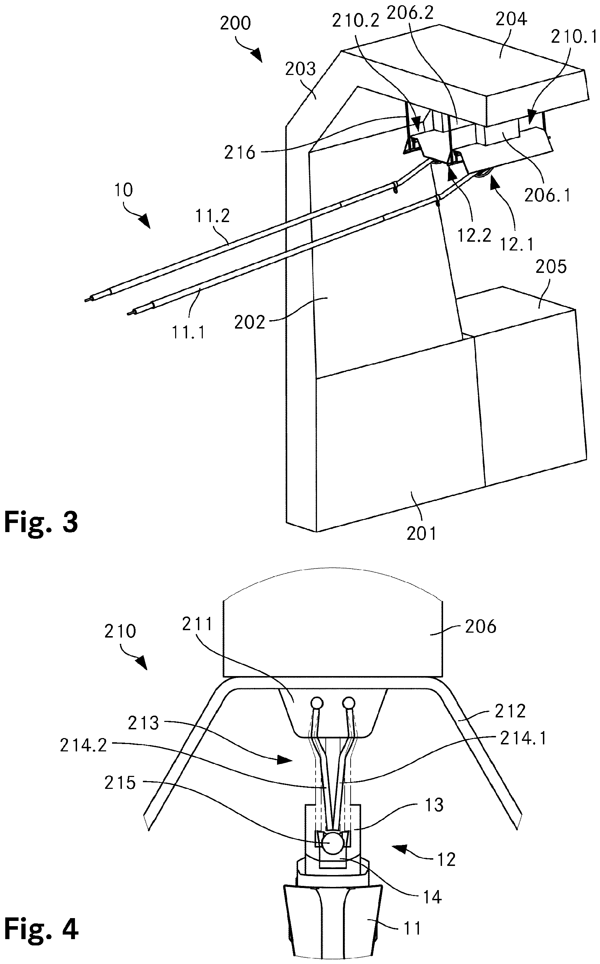

Die Figur 3 ist ein Schrägbild einer Ladestation gemäss einer zweiten Ausführungsform sowie eines Stromabnehmers eines Oberleitungsbusses in der Ladeposition. Die Figur 4 ist eine Detailansicht eines Stromabnehmerkopfes in der Ladeposition in der Ladestation gemäss der zweiten Ausführungsform.

In den Figuren 3 und 4 ist wiederum derselbe Stromabnehmer 10 mit den Stromabnehmerruten 11.1, 11.2 und den Stromabnehmerköpfen 12.1, 12.2 dargestellt.

Gemäss Figur 3 befindet sich der Stromabnehmer 10 in der Ladeposition bezüglich der Ladestation 200. Die Ladestation 200 umfasst wiederum eine Basis 201, welche am Boden in an sich bekannter Weise verankert ist. An die Basis 201 schliesst sich ein senkrecht verlaufender Seitenteil 202 an, dieser geht dann über einen schräg, in einem Winkel von ca. 45° verlaufenden Übergangsabschnitt 203 in einen horizontal orientierten Ausleger 204 über. Der Abstand zwischen Boden und Ausleger 204 ist so gewählt, dass ein Oberleitungsbus samt teilweise ausgefahrenem Stromabnehmer 10 die Kontaktelemente der Ladestation 200 kontaktieren kann. Er beträgt beispielsweise ca. 5.5-6.0 m. An der Basis 201 der Ladestation 200 ist ferner ein Umrichterkasten 205 angeordnet. Er umfasst Leistungs- und Steuerelektronik für die Ladestation und stellt insbesondere den benötigten Ladestrom bereit.

Über Halteteile 206.1, 206.2, welche auf der Unterseite des Auslegers 204 angeordnet sind, sind zwei Kontakteinheiten 210.1, 210.2 am Ausleger 204 angeordnet. Diese haben eine Hauptausdehnung parallel zur Hauptausdehnung der Stromabnehmerruten 11.1, 11.2, also im Wesentlichen parallel zur Fahrzeuglängsachse eines sich im Ladebereich befindenden Oberleitungsbusses. Der Abstand der Mittelachsen der beiden Kontakteinheiten 210.1, 210.2 entspricht dem Abstand der beiden Stromabnehmerruten 11.1, 11.2 und damit der beiden Stromabnehmerköpfe 12.1, 12.2.

Ein Stromabnehmerkopf 12 in Ladestellung in einer Kontakteinheit 210 ist in der Figur 4 dargestellt. Da beide Kontakteinheiten 210.1, 210.2 gleichartig aufgebaut sind, reicht die Darstellung einer Kontakteinheit 210 aus.

Die Kontakteinheit 210 ist wie erwähnt über einen Halteteil 206 am Ausleger 204 der Ladestation 100 befestigt. Sie umfasst eine Grundeinheit 211, an welcher die übrigen Elemente befestigt sind. Die Grundeinheit 211 weist einen im Wesentlichen trapezförmigen Querschnitt auf, sie erstreckt sich über die gesamte Länge der Kontakteinheit 210. An der Grundeinheit 211 befestigt ist ein Einfangrichter 212 mit einem parallel zum Ausleger 204, also horizontal, verlaufenden Basisabschnitt und zwei unter einem Winkel von je ca. 70° nach unten abstehenden Seitenabschnitten. Die beiden Seitenabschnitte bilden so einen von unten nach oben konisch zulaufenden (trichterartigen) Aufnahmeraum. Der Einfangtrichter 212 bildet so eine Zentriereinrichtung für eine Stromabnehmerrute 11 mit angebrachtem Stromabnehmerkopf 12.

An der Grundeinheit 211 der Kontakteinheit 210 ist weiter eine Kontaktzange 213 gelagert. Sie umfasst zwei Schenkel 214.1, 214.2, welche um horizontale, in Hauptausdehnung der Kontakteinheit 210 verlaufende Achsen schwenkbar sind. Der Abstand der Achsen entspricht ungefähr der Querausdehnung des Stromabnehmerkopfs 12. In der Figur 4 ist mit durchgehenden Linien die Freigabeposition der Kontaktzange 213 dargestellt, in welcher die beiden Schenkel 214.1, 214.2 ausgehend von der Grundeinheit 211 von oben nach unten schräg nach innen, aufeinander zu verlaufen. Der Winkel des freien Endabschnitts beträgt ca. 10° zur Vertikalen. Die zwei Schenkel 214.1, 214.2 der Kontaktzange 213 lassen sich mittels entsprechender Antriebe nach aussen verschwenken, bis sie eine im Wesentlichen parallele Stellung erreichen. Diese ist in der Figur 4 mit gestrichelten Linien dargestellt. In dieser Stellung werden die beiden Schenkel 214.1, 214.2 von innen auf die Innenflächen des Trägerteils 13 des Stromabnehmerkopfs 12 gedrückt. Der Anpressdruck beträgt dabei ca. 100°N oder mehr.

Die Schenkel 214.1, 214.2 der Kontaktzange 213 sind mit einer innerhalb der Grundeinheit 211 der Kontakteinheit 210 verlaufenden Speiseleitung verbunden. Sie schaffen so im geschlossenen Zustand eine elektrische Verbindung zwischen der Speiseleitung und dem Stromabnehmerkopf 210, wobei für diese elektrische Verbindung der üblicherweise für die elektrische Kontaktierung eingesetzte Kontaktschuh 14 keine Rolle spielt.

Die Kontakteinheit 210 umfasst schliesslich eine Führungsschiene 215, die als Lagerelement für die Kontakteinheit 210 gegenüber dem Stromabnehmerkopf 210 dient. Die Führungsschiene 215 weist einen kreisrunden Querschnitt auf, der demjenigen des Fahrdrahts entspricht. Sie ist mittels vertikal verlaufenden Halteabschnitten 216 am Ausleger 204 der Ladestation 200 befestigt (siehe Figur 3) und verläuft innerhalb des Einfangrichters 212 frei. Sie kann so mit der Kontaktausnehmung des Kontaktschuhs 14 zusammenwirken und nimmt den Anpressdruck der Federmittel des Stromabnehmers 10 auf.

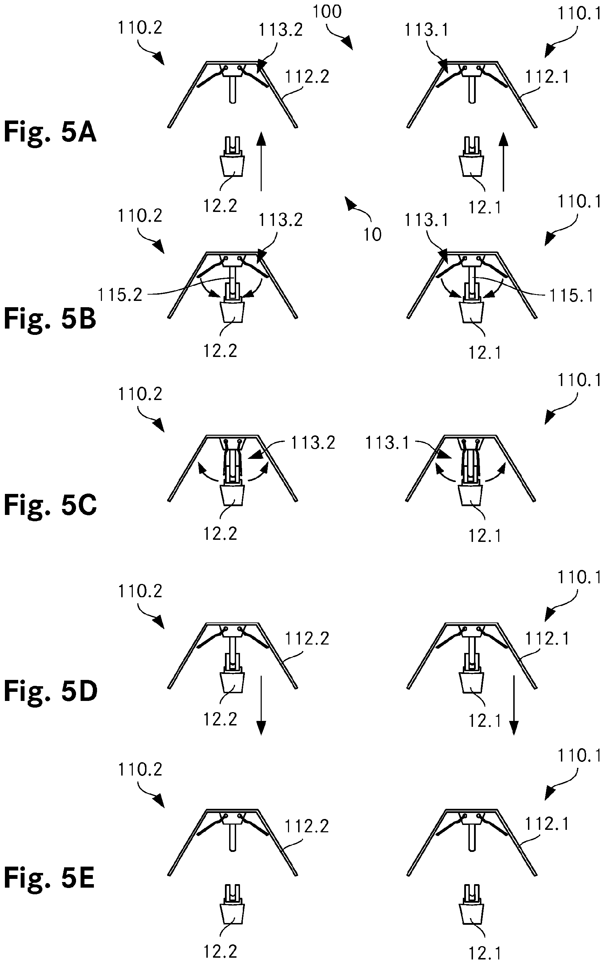

Die Figuren 5A-E sind schematische Darstellungen zur Illustration des Ablaufs eines erfindungsgemässen Ladeverfahrens, hier anhand einer Ladestation gemäss der ersten Ausführungsform. Der Oberleitungsbus wird zunächst mit abgesenkten Stromabnehmern in den Bereich der Ladestation 100 gefahren, d. h. an eine Position, in welcher die Stromabnehmerköpfe 12.1, 12.2 des Stromabnehmers 10 nach dem Anheben mit den Kontakteinheiten 110.1, 110.2 zusammenwirken können. Der Oberleitungsbus muss dabei nicht zwingend in der Flucht der Führungsschienen 115.1, 115.2 stehen, auch eine seitlich und/oder winklig versetzte Position ist innerhalb gewisser Grenzen möglich, diese lässt sich - wie im Fahrbetrieb - durch eine entsprechende Stellung des Stromabnehmers und der Stromabnehmerköpfe 12.1, 12.2 relativ zu den Stromabnehmerruten kompensieren. Aufgrund der Längsausdehnung der Kontakteinheiten 110.1, 110.2 ergibt sich auch ein gewisser Längsbereich, welcher für die Positionierung der Stromabnehmerköpfe 12.1, 12.2 für den Ladevorgang in Frage kommt.

Die Kontaktzangen 113.1, 113.2 sind - wie in der Figur 5A dargestellt - zunächst geöffnet, d. h. im Rahmen der ersten Ausführungsform sind die Schenkel nach aussen verschwenkt. Die Stromversorgung für die Kontaktzangen 113.1, 113.2 ist ausgeschaltet. Die Stromabnehmerköpfe 12.1, 12.2 werden nun - in an sich bekannter Weise, wie beim Eindrahten an die Oberleitung - angehoben, so dass sie sich auf die Kontakteinheiten 110.1, 110.2 zu bewegen. Dieser Vorgang wird gegebenenfalls durch die Einfangtrichter 112.1, 112.2 unterstützt.

Es ergibt sich die in der Figur 5B dargestellte Situation: Die Stromabnehmerköpfe 12.1, 12.2 wirken über ihre Geometrie zur Kontaktierung des Fahrdrahts mit den Führungsschienen 115.1, 115.2 der Kontakteinheiten 110.1, 110.2 zusammen, sie sind aufgrund des Formschlusses und der von unten auf die Stromabnehmerköpfe 12.1, 12.2 wirkenden Anpresskraft sowohl in vertikaler als auch in horizontaler Richtung fixiert. Diese Positionierung wird durch geeignete Sensoren erfasst. Diese Sensoren können mechanisch, optisch oder auf andere Weise funktionieren und insbesondere mit den Führungsschienen 115.1, 115.2 zusammenwirken.

Sobald die korrekte Positionierung der Stromabnehmerköpfe 12.1, 12.2 festgestellt worden ist, werden die beiden Schenkel der Kontaktzangen 113.1, 113.2 nach innen verschwenkt, bis sie die Aussenseite der Stromabnehmerköpfe 12.1, 12.2 grossflächig kontaktieren.

Es ergibt sich die in der Figur 5C dargestellte Situation. Mittels einer Impedanzmessung wird nun überprüft, ob zwischen den Kontaktzangen 113.1, 113.2 der Kontakteinheiten 110.1, 110.2 und dem jeweiligen Stromabnehmerkopf 12.1, 12.2 ein zuverlässiger elektrischer Kontakt geschaffen worden ist. Ist dies der Fall, kann der Ladevorgang gestartet und die Stromversorgung für die Kontaktzangen 113.1, 113.2 eingeschaltet werden. Im Zusammenhang mit dem Ladevorgang besteht zudem eine Signalverbindung zwischen dem Oberleitungsbus und der Ladestation. Über ein geeignetes Protokoll können Ladeparameter übermittelt werden, und der Beginn sowie das Ende des Ladevorgangs können zwischen der Ladeelektronik des Oberleitungsbusses und der Stromversorgung der Ladestation koordiniert werden.

Sobald der Ladevorgang beendet ist, weil beispielsweise der Energiespeicher des Oberleitungsbusses vollständig geladen ist oder weil der Oberleitungsbus fahrplanbedingt die Ladestation verlassen muss, wird die Stromversorgung für die Kontaktzangen 113.1, 113.2 wieder unterbrochen. Anschliessend werden die Schenkel der Kontaktzangen 113.1, 113.2 nach aussen, von den Stromabnehmerköpfen 12.1, 12.2 weg verschwenkt.

Es ergibt sich die in der Figur 5D dargestellte Situation. Die Stromabnehmerköpfe 12.1, 12.2 können nun in an sich bekannter Weise nach unten abgesenkt werden, bis sie den Bereich der Einfangtrichter 112.1, 112.2 verlassen haben. Es ergibt sich somit die in der Figur 5E dargestellte Situation, und der Oberleitungsbus kann aus der Ladestation weg gefahren werden.

Die Erfindung ist nicht auf die dargestellten Ausführungsbeispiele beschränkt. So kann insbesondere die Geometrie der Elemente der Kontakteinheiten sowie der Ladestation als solche anders gewählt werden. Zur Vereinfachung und Beschleunigung der Kontaktierung der Ladestation kann der Oberleitungsbus eine Einrichtung zur automatischen Querpositionierung der Stromabnehmerköpfe umfassen. Diese weist geeignete Sensoren zur Positionsbestimmung (absolut oder relativ zu den Kontaktelementen der Kontakteinrichtungen) auf sowie Aktoren zum Bewegen der Stromabnehmerruten und Stromabnehmerköpfe. Sie kann den Busfahrer zudem bereits beim Anfahren der Ladestation unterstützen.

Anstelle der Kontaktzangen kann zur Kontaktierung der metallischen Oberflächenbereiche der Stromabnehmerköpfe auch ein flächiges Element eingesetzt werden, welches die beiden Stirnseiten der Schenkel des U-förmigen Trägerteils kontaktiert oder ein Element, welches sonst wie an die Geometrie des Trägerteils angepasst ist.

Zusammenfassend ist festzustellen, dass die Erfindung eine Ladestation für einen Oberleitungsbus schafft, welche eine hohe Ladeleistung bei einfachem Aufbau ermöglicht.

## Patentansprüche

1. Ladestation für einen Oberleitungsbus, der einen Stromabnehmer mit zwei Stromabnehmerköpfen mit Kontaktschuhen zur Kontaktierung einer Gleichstrom führenden Oberleitung im Fahrbetrieb, mindestens einen Antriebsmotor zum Antreiben einer Antriebsachse und einen Energiespeicher zur Zwischenspeicherung von über den Stromabnehmer aufgenommener elektrischer Energie umfasst, wobei die Ladestation eine Stromversorgung und zwei damit leitend verbundene Kontaktelemente zur Kontaktierung der zwei Stromabnehmerköpfe umfasst, **dadurch gekennzeichnet, dass** die Kontaktelemente derart ausgeführt und angeordnet sind, dass bei in der Ladestation in Ladeposition befindlichem Oberleitungsbus eine leitende Verbindung zwischen den Kontaktelementen und metallischen Oberflächenbereichen der Stromabnehmerköpfe ausserhalb der Kontaktschuhe gebildet ist.

2. Ladestation nach Anspruch 1, **dadurch gekennzeichnet, dass** die Kontaktelemente zangenartig ausgebildet sind und zwei Schenkel mit einander zugewandten Innenseiten und voneinander abgewandten Aussenseiten aufweisen, wobei Kontaktflächen für die metallischen Oberflächenbereiche der Stromabnehmerköpfe an den Innenseiten und/oder den Aussenseiten angeordnet sind.

3. Ladestation nach Anspruch 2, **dadurch gekennzeichnet, dass** die zwei Schenkel schwenkbeweglich sind, um mit einer vorgebbaren Anpresskraft auf einen aufgenommenen Stromabnehmerkopf einzuwirken.

4. Ladestation nach einem der Ansprüche 1 bis 3, **dadurch gekennzeichnet, dass** eine Längsausdehnung der Kontaktelemente in Fahrdrahtrichtung mindestens 3 mal, bevorzugt mindestens 5 mal, grösser ist als eine Längsausdehnung der Stromabnehmerköpfe.

5. Ladestation nach einem der Ansprüche 1 bis 4, **gekennzeichnet durch** ein Lagerelement zur mechanischen Abstützung der Stromabnehmerköpfe im Bereich der Kontaktschuhe, wobei das Lagerelement insbesondere nicht mit der Stromversorgung der Ladestation verbunden ist.

6. Ladestation nach einem der Ansprüche 1 bis 5, **gekennzeichnet durch** eine Zentriereinrichtung für die Stromabnehmerköpfe.

7. Ladestation nach einem der Ansprüche 1 bis 6, **gekennzeichnet durch** eine Einrichtung zur Impedanzmessung in Bezug auf eine Verbindung zwischen den Kontaktelementen und den Stromabnehmerköpfen.

8. Ladestation nach einem der Ansprüche 1 bis 7, **dadurch gekennzeichnet, dass** eine Ladespannung von mindestens 550 V und eine Ladeleistung von mindestens 100 kW, bevorzugt mindestens 150 kW, erzeugbar ist.

9. Ladestation nach Anspruch 8, **gekennzeichnet durch** einen Netzanschluss, einen Energiespeicher zur Zwischenspeicherung von über den Netzanschluss aufgenommener elektrischer Energie und einen Spannungswandler zur Erzeugung der Ladespannung.

10. Oberleitungsbus-System umfassend
a) mindestens einen Oberleitungsbus mit einem Stromabnehmer mit zwei Stromabnehmerköpfen mit Kontaktschuhen zur Kontaktierung einer Gleichstrom führenden Oberleitung im Fahrbetrieb, mindestens einem Antriebsmotor zum Antreiben einer Antriebsachse und einem Energiespeicher zur Zwischenspeicherung von über den Stromabnehmer aufgenommener elektrischer Energie;
b) mindestens einen Fahrabschnitt mit einer Oberleitung zur Speisung des Oberleitungsbusses über die Kontaktschuhe im Fahrbetrieb; und
c) mindestens eine Ladestation nach einem der Ansprüche 1 bis 8 zum stationären Aufladen des Energiespeichers über metallische Oberflächenbereiche der Stromabnehmerköpfe ausserhalb der Kontaktschuhe.

11. Oberleitungsbus-System nach Anspruch 10, **dadurch gekennzeichnet, dass** der Oberleitungsbus eine Einrichtung zur automatischen Querpositionierung der Stromabnehmerköpfe umfasst.

12. Verfahren zum Aufladen eines Energiespeichers eines Oberleitungsbusses mit einem Stromabnehmer mit zwei Stromabnehmerköpfen mit Kontaktschuhen zur Kontaktierung einer Gleichstrom führenden Oberleitung im Fahrbetrieb und mindestens einem Antriebsmotor zum Antreiben einer Antriebsachse, umfassend folgende Schritte:
a) Bewegen des Oberleitungsbusses in den Bereich einer Ladestation;
b) Anheben der Stromabnehmer mit den Stromabnehmerköpfen zur Kontaktierung von Kontaktelementen der Ladestation, wobei die Kontaktelemente metallische Oberflächenbereiche der Stromabnehmerköpfe ausserhalb der Kontaktschuhe leitend kontaktieren;
c) Feststellen eines leitenden Kontakts zwischen den Kontaktelementen und den metallischen Oberflächenbereichen; und
d) Einschalten eines Ladestroms zwischen der Ladestation und den Stromabnehmerköpfen.

13. Verfahren nach Anspruch 12, **dadurch gekennzeichnet, dass** die Feststellung des leitenden Kontakts gestützt auf eine Impedanzmessung erfolgt.

14. Verfahren nach Anspruch 12 oder 13, **dadurch gekennzeichnet, dass** beim Anheben der Stromabnehmer die Kontaktschuhe der Stromabnehmerköpfe zunächst ein Lagerelement zur mechanischen Abstützung kontaktieren, wonach zangenartige Kontaktelemente mit einer vorgegebenen Anpresskraft auf die Stromabnehmerköpfe zugestellt werden, so dass Innenseiten und/oder Aussenseiten von Schenkeln der zangenartigen Kontaktelemente die metallischen Oberflächenbereich der Stromabnehmerköpfe elektrisch kontaktieren.

## Claims

1. Charging station for a trolleybus, which comprises a current collector having two current collector heads having contact shoes for making contact with a direct-current-carrying trolley wire during operation, at least one drive motor for driving a drive axle and an energy store for the intermediate storage of electrical energy that is drawn by means of the current collector, wherein the charging station comprises a power supply and two contact elements conductively connected thereto for making contact with the two current collector heads, **characterized in that** the contact elements are embodied and arranged in such a way that, when the trolleybus is in the charging station in the charging position, a conductive connection is formed between the contact elements and metal surface regions of the current collector heads outside of the contact shoes.

2. Charging station according to Claim 1, **characterized in that** the contact elements are formed in the manner of tongs and have two limbs having inner sides facing one another and outer sides facing away from one another, wherein contact areas for the metal surface regions of the current collector heads are arranged on the inner sides and/or the outer sides.

3. Charging station according to Claim 2, **characterized in that** the two limbs are able to pivot in order to act with a prescribable pressing force on a received current collector head.

4. Charging station according to one of Claims 1 to 3, **characterized in that** a longitudinal extent of the contact elements in the overhead wire direction is at least three times, preferably at least five times, greater than a longitudinal extent of the current collector heads.

5. Charging station according to one of Claims 1 to 4, **characterized by** a bearing element for mechanically supporting the current collector heads in the region of the contact shoes, wherein the bearing element is in particular not connected to the power supply of the charging station.

6. Charging station according to one of Claims 1 to 5, **characterized by** a centring device for the current collector heads.

7. Charging station according to one of Claims 1 to 6, **characterized by** a device for impedance measurement with respect to a connection between the contact elements and the current collector heads.

8. Charging station according to one of Claims 1 to 7, **characterized in that** a charging voltage of at least 550 V and a charging power of at least 100 kW, preferably at least 150 kW, are able to be produced.

9. Charging station according to Claim 8, **characterized by** a mains connection, an energy store for the intermediate storage of electrical energy that is drawn by the mains connection and a voltage converter for producing the charging voltage.

10. Trolleybus system comprising
a) at least one trolleybus having a current collector having two current collector heads having contact shoes for making contact with a direct-current-carrying trolley wire during operation, at least one drive motor for driving a drive axle and an energy store for the intermediate storage of electrical energy that is drawn by means of the current collector;
b) at least one travel section having a trolley wire for feeding the trolleybus via the contact shoes during operation; and
c) at least one charging station according to one of Claims 1 to 8 for the stationary charging of the energy store via metal surface regions of the current collector heads outside of the contact shoes.

11. Trolleybus system according to Claim 10, **characterized in that** the trolleybus comprises a device for the automatic transverse positioning of the current collector heads.

12. Method for charging an energy store of a trolleybus having a current collector having two current collector heads having contact shoes for making contact with a direct-current-carrying trolley wire during operation and at least one drive motor for driving a drive axle, comprising the following steps:
a) moving the trolleybus into the region of a charging station;
b) raising the current collectors with the current collector heads in order to make contact with contact elements of the charging station, wherein the contact elements make conductive contact with metal surface regions of the current collector heads outside of the contact shoes;
c) establishing conductive contact between the contact elements and the metal surface regions; and
d) switching on a charging current between the charging station and the current collector heads.

13. Method according to Claim 12, **characterized in that** the conductive contact is established based on an impedance measurement.

14. Method according to Claim 12 or 13, **characterized in that**, when the current collectors are raised, the contact shoes of the current collector heads initially make contact with a bearing element for mechanical support, whereupon tong-like contact elements are delivered onto the current collector heads with a prescribed pressing force with the result that inner sides and/or outer sides of limbs of the tong-like contact elements make electrical contact with the metal surface regions of the current collector heads.

## Revendications

1. Station de charge pour un trolleybus, qui comprend un collecteur de courant pourvu de deux têtes collectrices de courant comportant des patins de contact destinés à venir au contact d'une ligne aérienne parcourue par un courant continu pendant le déplacement, au moins un moteur d'entraînement destiné à entraîner un essieu d'entraînement et un accumulateur d'énergie destiné au stockage intermédiaire de l'énergie électrique reçue par l'intermédiaire du collecteur de courant, dans lequel la station de charge comprend une alimentation électrique et deux éléments de contact reliés à celle-ci de manière conductrice et destinés à venir au contact des deux têtes collectrices de courant, **caractérisée en ce que** les éléments de contact sont conçus et agencés de telle manière que lorsque le trolleybus se trouve en position de charge dans la station de charge, une liaison conductrice est établie à l'extérieur des patins de contact entre les éléments de contact et des zones de surface métalliques des têtes collectrices de courant.

2. Station de charge selon la revendication 1, **caractérisée en ce que** les éléments de contact sont réalisés sous forme de pinces et présentent deux branches dont les faces internes sont tournées l'une vers l'autre et les faces externes sont tournées à l'opposé l'une de l'autre, dans laquelle les surfaces de contact destinées aux zones de surface métalliques des têtes collectrices de courant sont agencées sur les faces internes et/ou les faces externes.

3. Station de charge selon la revendication 2, **caractérisée en ce que** les deux branches sont mobiles de manière pivotante afin d'agir avec une force de contact prédéfinissable sur une tête collectrice de courant reçue.

4. Station de charge selon l'une des revendications 1 à 3, **caractérisée en ce qu'**une extension longitudinale des éléments de contact dans la direction du câble de contact est au moins 3 fois, de préférence au moins 5 fois, supérieure à une extension longitudinale des têtes collectrices de courant.

5. Station de charge selon l'une des revendications 1 à 4, **caractérisée par** un élément de support destiné à soutenir mécaniquement les têtes collectrices de courant dans la zone des patins de contact, dans laquelle l'élément de support n'est en particulier pas relié à l'alimentation électrique de la station de charge.

6. Station de charge selon l'une des revendications 1 à 5, **caractérisée par** un dispositif de centrage des têtes collectrices de courant.

7. Station de charge selon l'une des revendications 1 à 6, **caractérisée par** un dispositif destiné à mesurer l'impédance par rapport à une liaison entre les éléments de contact et les têtes collectrices de courant.

8. Station de charge selon l'une des revendications 1 à 7, **caractérisée en ce qu'**une tension de charge d'au moins 550 V et une puissance de charge d'au moins 100 kW, de préférence d'au moins 150 kW, peuvent être produites.

9. Station de charge selon la revendication 8, **caractérisée par** une connexion au réseau, un accumulateur d'énergie destiné au stockage intermédiaire d'énergie électrique reçue par l'intermédiaire de la connexion au réseau et un convertisseur de tension destiné à produire la tension de charge.

10. Système de trolleybus comprenant
a) au moins un bus de ligne aérienne de contact, qui comprend un collecteur de courant pourvu de deux têtes collectrices de courant comportant des patins de contact destinés à venir au contact d'une ligne aérienne parcourue par un courant continu pendant le déplacement, au moins un moteur d'entraînement destiné à entraîner un essieu d'entraînement et un accumulateur d'énergie destiné au stockage intermédiaire de l'énergie électrique reçue par l'intermédiaire du collecteur de courant ;
b) au moins une section de conduite comportant une ligne aérienne destinée à alimenter le trolleybus par l'intermédiaire des patins de contact pendant le déplacement ; et
c) au moins une station de charge selon l'une des revendications 1 à 8 destinée à la charge stationnaire de l'accumulateur d'énergie par l'intermédiaire de zones de surface métalliques des têtes collectrices de courant à l'extérieur des patins de contact.

11. Système de trolleybus selon la revendication 10, **caractérisé en ce que** le trolleybus comprend un dispositif destiné au positionnement transversal automatique des têtes collectrices de courant.

12. Procédé destiné à charger un accumulateur d'énergie d'un trolleybus qui comprend un collecteur de courant pourvu de deux têtes collectrices de courant comportant des patins de contact destinés à venir au contact d'une ligne aérienne parcourue par un courant continu pendant le déplacement et au moins un moteur d'entraînement destiné à entraîner un essieu d'entraînement, comprenant les étapes consistant à :
a) déplacer le trolleybus vers la zone d'une station de charge ;
b) soulever les collecteurs de courant comportant les têtes collectrices de courant pour qu'ils viennent au contact des éléments de contact de la station de charge, dans lequel les éléments de contact sont mis en contact conducteur avec des zones de surface métalliques des têtes collectrices de courant à l'extérieur des patins de contact ;
c) détecter un contact conducteur entre les éléments de contact et les zones de surface métalliques ; et
d) appliquer un courant de charge entre la station de charge et les têtes collectrices de courant.

13. Procédé selon la revendication 12, **caractérisé en ce que** la détection du contact conducteur s'effectue sur la base d'une mesure d'impédance.

14. Procédé selon la revendication 12 ou 13, **caractérisé en ce que** lorsque les collecteurs de courant sont soulevés, les patins de contact des têtes collectrices de courant viennent d'abord au contact d'un élément de support destiné au support mécanique, puis des éléments de contact en forme de pinces sont avancés sur les têtes collectrices de courant avec une force de pression prédéterminée, de sorte que les faces internes et/ou les faces externes des éléments de contact sont mis en contact électrique avec les têtes collectrices de courant métalliques.
